# EUROPÄISCHE PATENTANMELDUNG

(11) **EP 1 364 602 A2**
(43) Veröffentlichungstag der Anmeldung: **26.11.2003**
(21) Anmeldenummer: 03011527.3
(22) Anmeldetag: 21.05.2003
(51) Int. Cl.: A47C 27/06

(54) **Federkern für Matratzen**

(30) Priorität: 24.05.2002 DE 10223280
(71) Anmelder: AGRO Federkernproduktions GmbH, 49152 Bad Essen-Wittlage (DE)
(72) Erfinder: Grothaus, Wolfgang, 49152 Bad Essen (DE)
(74) Vertreter: Dantz, Jan Henning

(57) **Zusammenfassung**

Ein Federkern, vorzugsweise Taschenfederkern, mit einer Vielzahl von gleich hohen, miteinander verbundenen Federn (1), die zu aneinander liegenden, eine Liegefläche bildenden Reihen (2) zusammengefaßt sind, ist so ausgestaltet, daß zumindest mehrere der Reihen (2) in ihrer Höhe gegenüber den jeweils benachbarten versetzt angeordnet sind.

## Beschreibung

Die vorliegende Erfindung betrifft einen Federkern gemäß dem Oberbegriff des Anspruchs 1.

Derartige Federkerne, vorzugsweise Taschenfederkerne, sind bislang so ausgebildet, daß die durch die aneinander liegenden Reihen gebildete Liegefläche sowohl belastet wie auch unbelastet durchgehend plan ist.

Hinsichtlich des Federungskomforts werden jedoch Anforderungen an einen Federkern gestellt, der durch den bekannten nicht realisierbar ist.

So soll zunächst beim Benutzen einer den Federkem beinhaltenden Matratze ein weiches Einsinken bestimmter Körperregionen möglich sein, ehe eine stärkere Unterstützung zum Tragen kommt.

Zwar wird versucht, durch Aufbringen von Polsterungen eine gewisse Weichheit zu erreichen, jedoch ist dieses Aufpolstern der Matratze nicht geeignet, den Anforderungen im weitesten Sinne gerecht zu werden, zumal die Elastizität einer solchen Aufpolsterung nicht vergleichbar ist mit einer Federung.

Aus der DE 297 22 598 U1 ist ein Federkern bekannt, bei dem eine Verbesserung des Liegekomforts dadurch erzielt werden soll, daß die Federn der einzelnen Reihen unterschiedlich hoch sind. Dies hat jedoch eine Veränderung der Federcharakteristik zur Folge, die prinzipiell kein befriedigendes Ergebnis mit sich bringt.

Darüber hinaus ist die Herstellung eines solchen Federkerns aufwendiger und problematischer als bei einem solchen, dessen Federn insgesamt gleich hoch sind.

Der vorliegenden Erfindung liegt daher die Aufgabe zugrunde, einen Federkern der gattungsgemäßen Art so weiterzuentwickeln, daß sein Liegekomfort bei geringst möglichem Fertigungsaufwand verbessert wird.

Diese Aufgabe wird durch einen Federkern gelöst, der die Merkmale des Anspruchs 1 aufweist.

Durch diese Ausbildung eines Federkerns wird eine sehr sensitve Federung erreicht, durch die sich die Oberfläche des Federkernes äußerst weich anfühlt.

Hervorstehende Körperregionen können so zunächst einmal tiefer in die Matratze einsinken. Sobald die tiefer liegenden Reihen erreicht werden, kann die zusätzliche Federkraft den Liegenden optimal stützen. Hierdurch ergibt sich eine progressive Federkraft, durch die eine bemerkenswerte Erholung beispielsweise der Wirbelsäule erreicht wird. Das progressive Federverhalten resultiert daraus, daß bei einem höheren Gewicht ein größerer Gegendruck entsteht.

Die versetzte Federanordnung führt gleichermaßen zu einer besonders guten Körperanpassung des Federkerns insgesamt, die gleichfalls zur Komforterhöhung beiträgt.

Nach einer vorteilhaften Weiterbildung der Erfindung ist vorgesehen, die Federn verschiedener Reihen unterschiedlich hart zu gestalten, was durch eine entsprechende Auswahl der Drahtstärke, verschiedene Federdurchmesser oder Drahthärten erzielt werden kann.

Dies schafft die Möglichkeit, mit Hilfe eines solchen Federkerns eine sogenannte Wendematratze herzustellen, die, je nach Bedarf, entweder einerseits oder andererseits benutzt werden kann.

Prinzipiell besteht die Möglichkeit, lediglich einen Teil der Reihen in ihrer Höhe gegenüber den benachbarten unversetzt anzuordnen, d. h., mehrere, in einer Ebene liegende Reihen, bezogen auf die Benutzungsseite, überstehend bzw. abgesenkt zu lassen, wodurch sich eine sogenannte Mehrzonen-Ausführung ergibt, die auf bestimmte Körperregionen eingestellt sein kann, möglicherweise in Kombination mit den unterschiedlich ausgebildeten Federn, wie beschrieben.

Vorteilhafte Weiterbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Draufsicht auf einen erfindungsgemäßen Federkem,
- Figur 2: den Federkem in einer Seitenansicht.

In den Figuren ist ein als Taschenfederkern ausgebildeter Federkern dargestellt, der eine Vielzahl von sich quer zur Längsachse erstreckende Reihen 2 aufweist, die nebeneinander und aneinander liegen und die jeweils aus einer Vielzahl von Federn 1, vorzugsweise Tonnenfedern, bestehen, die in jeweils einer Tasche plaziert sind, die vorzugsweise aus textilem Material bestehen und jede Feder 1 umhüllen.

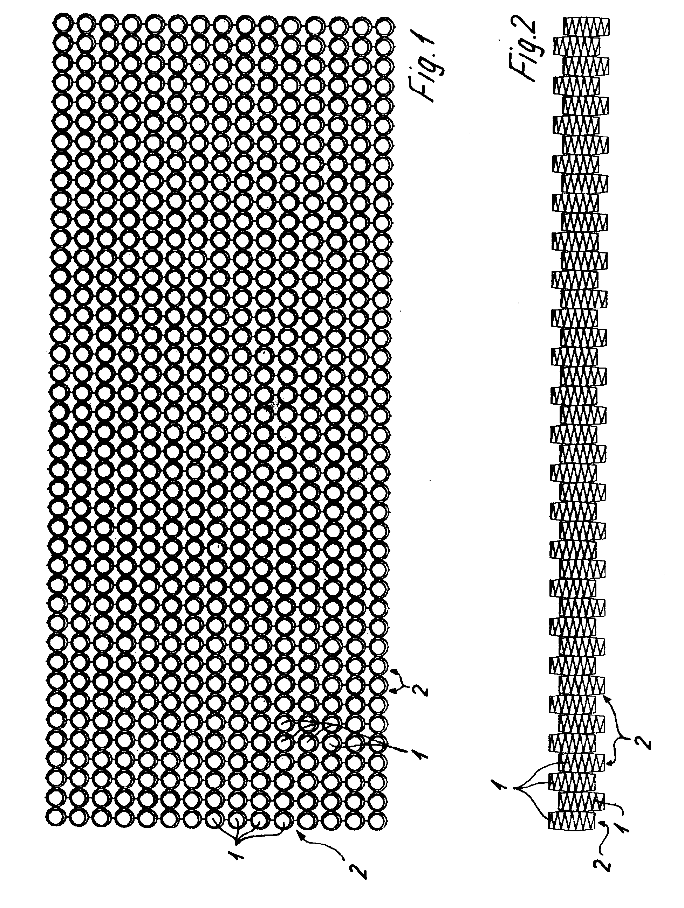

Wie insbesondere die Figur 2 sehr deutlich zeigt, sind im vorliegenden Ausführungsbeispiel die Reihen 2 abwechselnd in ihrer Höhe gegenüber den jeweils benachbarten versetzt angeordnet, wobei sich durch die gleiche Höhe aller Federn 1 in unbelasteter Stellung des Federkernes zwischen den erhabenen Reihen 2 jeweils eine Vertiefung ergibt.

Bei einer Benutzung, d. h., einem Aufliegen werden zunächst die hervorstehenden Reihen niedergedrückt, wobei sich ein sehr weiches Gefühl einstellt und hervorstehende Körperpartien zunächst in den Federkern einsinken. Erst wenn die entsprechenden Federn 1 der erhabenen Reihen 2 auf das Niveau der tiefer liegenden, versetzt dazu angeordneten Reihen 2 zusammengedrückt sind, ergibt sich eine vollständige Unterstützung der Körperbereiche, während andere, die nicht so weit einsinken, in dem erhabenen Bereich verbleiben.

Wie erwähnt, kann anstelle des steten Wechsels einer erhabenen und einer abgesenkten Reihe der Federkern partiell beispielsweise auch mit zwei nebeneinander liegenden erhabenen Reihen 2 ausgestattet sein, an die sich jeweils eine abgesenkte Reihe 2 anschließt.

### Bezugszeichenliste

- 1: Feder
- 2: Reihen

## Patentansprüche

1. Federkern, vorzugsweise Taschenfederkern, mit einer Vielzahl von gleich hohen, miteinander verbundenen Federn (1), die zu aneinander liegenden, eine Liegefläche bildenden Reihen (2) zusammengefaßt sind, **dadurch gekennzeichnet, daß** zumindest mehrere der Reihen (2) in ihrer Höhe gegenüber den jeweils benachbarten versetzt angeordnet sind.

2. Federkern nach Anspruch 1, **dadurch gekennzeichnet, daß** jede Reihe (2) gegenüber der benachbarten versetzt ist.

3. Federkern nach Anspruch 1, **dadurch gekennzeichnet, daß** die versetzt zu den benachbarten Reihen gegenüber diesen eine unterschiedliche Härte aufweisen.

4. Federkern nach Anspruch 3, **dadurch gekennzeichnet, daß** die Federn (1) der versetzten Reihen (2) gegenüber den Federn der benachbarten Reihen (2) unterschiedliche Drahtstärken, unterschiedliche Durchmesser oder unterschiedliche Drahthärten aufweisen.

5. Federkern nach einem der Ansprüche 1 bis 4, **dadurch gekennzeichnet, daß** mehrere aneinander liegende Reihen (2) gegenüber den daran angrenzenden versetzt sind.
